(19) **Europäisches Patentamt**
**European Patent Office**
**Office européen des brevets**

(11) **EP 3 923 190 A1**

(12) **EUROPEAN PATENT APPLICATION**

(43) Date of publication:
**15.12.2021 Bulletin 2021/50**

(51) Int Cl.:
*G06K 9/46* (2006.01)      *G06K 9/00* (2006.01)

(21) Application number: **20179053.2**

(22) Date of filing: **09.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **ELEN, Bart**
**2400 Mol (BE)**
• **GERRITS, Nele**
**2400 Mol (BE)**
• **VAN CRAENENDONCK, Toon**
**2500 Lier (BE)**
• **DE BOEVER, Patrick**
**2150 Borsbeek (BE)**

(74) Representative: **V.O.**
**P.O. Box 87930**
**2508 DH Den Haag (NL)**

(54) **A SYSTEM AND METHOD FOR EVALUATING A PERFORMANCE OF EXPLAINABILITY METHODS USED WITH ARTIFICIAL NEURAL NETWORKS**

(57)      A computing system configured to perform the steps of dividing both a saliency map and a ground-truth feature map into cells in order to obtain segmented saliency map and a segmented feature map, wherein a relevance score is assigned to each cell based on values of individual pixels within the cells in the saliency map and feature map, selecting, for both the segmented saliency map and segmented feature map, a selected number of selected cells corresponding to the most relevant cells having highest relevance scores within the segmented saliency map and the segmented feature map, respectively, and computing a level of agreement between the segmented saliency map and the segmented feature map by comparing the selected cells having highest relevance scores in the segmented saliency map to the selected cells having highest relevance scores in the segmented feature map.

**Description**

FIELD OF THE INVENTION

The invention relates to a computing system and a computer-implemented method for evaluating a performance of explainability methods used with artificial neural networks which are configured to analyze medical images. Further, the invention relates to a computer program product and the use of the computing system for evaluating performances of explainability methods used with artificial neural networks. The invention also relates to a non-transitory computer-readable medium with software instructions.

BACKGROUND TO THE INVENTION

Analysis of medical images for determining a condition of a subject can be a time-consuming and expensive process, for example requiring trained clinicians to at least partially manually examine and evaluate medical images. It is desired to enable early detection of medical conditions to provide patients with timely access to diagnostics and treatment options. Detection of a disease at its early phase is often critical to the recovery of patients or to prevent the disease from advancing to more severe stages. For example, photographs of the body, e.g. the retina, may be analyzed to determine whether the subject has a medical condition, e.g. vision loss over time by analysis of the retina image. For example, continued proliferation of preventable eye diseases such as diabetic retinopathy, macular degeneration, and glaucoma, which can cause permanent vision loss over time if left undiagnosed, can be prevented.

Computer aided diagnosis systems can be used for supporting in diagnosis performed by a medical doctor/expert or the like. Such systems may be configured to perform image analysis on a medical image obtained by means of one or more medical imaging systems. In some cases, machine learning models are employed for identification of diagnostic target regions of a subject and/or abnormal areas in the medical image indicative of a medical condition.

For example, the machine learning model may include a trained artificial neural network configured to receive a medical image (e.g. picture of a retina of an eye) of a subject, and trained to analyze the input image and provide an output indicative of one or more conditions of the subject being examined. The machine learning model may for instance be trained to generate the output based on whether one or more particular patterns have appeared in the medical image.

Such computer aided tools and systems can significantly assist medical experts with medical examination, for instance by automatically indicating regions (e.g. overlay heatmap) which were most relevant for the machine learning model to arrive at the analysis and/or classification. In this way, the overall workload can be significantly reduced, enabling a more efficient analysis and/or diagnosis. For instance, it can be possible to screen a large number of images automatically, and flag the cases which are to be further analyzed by an expert for validation purposes. This can enable earlier detection of medical conditions, which can in some cases be curable or preventable only if detected early.

Whilst machine learning models have recently demonstrated promising performance in performing medical image analysis, they are hardly perfect at the moment. In medical image analysis, explainability methods are typically used with artificial neural networks for providing saliency maps with values which are assigned to reflect the importance of input components (e.g. specific regions in the image) in the contribution to the output of the artificial neural network. In some examples, the saliency maps can take the form of heat scores (cf. heatmap) which can be overlaid with the initial input image in order to visually indicate discriminative features used e.g. for classifications.

Various explainability methods exist in the art, such as for instance Grad-CAM (see Ramprasaath R. Selvaraju et al. "Grad-CAM: Visual Explanations from Deep Networks via Gradient-based Localization", in International Journal of Computer Vision 128, 336-359 (2020)). The Grad-CAM explainability method can provide a saliency-map in the form of a heatmap on images obtained by means of an imaging system. High intensity in the heatmap can mark the important regions in the image which the artificial neural network 'sees' (i.e. identifies) patterns and/or local features contributing in its output. These saliency maps can help the medical expert to understand whether the neural network is properly identifying the patterns and/or local features for the analysis and/or classification.

However, a large number of alternative explainability methods exist making the selection difficult, since it can depend on various aspects. It can be difficult to assess which explainability method will provide better results. There is a need for an improved evaluation of performances of explainability methods used with various artificial neural networks.

SUMMARY OF THE INVENTION

It is an object of the invention to provide for a method and a system that obviates at least one of the above mentioned drawbacks.

Additionally or alternatively, it is an object of the invention to improve evaluation of a performance of explainability methods used with artificial neural networks.

Additionally or alternatively, it is an object of the invention to provide for a systematic and/or objective comparison of explainability methods used in combination with artificial neural network architectures trained for certain applications.

Thereto, the invention provides for a computing system configured to evaluate a performance of explainability methods used with artificial neural networks which are configured to analyze images of retina of eyes of subjects, the system including one or more hardware computer processors, and one more storage devices configured to store software instructions configured for execution by the one or more hardware computer processors in order to cause the system to: receiving a saliency map of a retina image generated by applying an explainability method on a trained artificial neural network of a machine learning model, the trained artificial neural network being configured to perform image analysis on the retina image; receiving a feature map of the retina image with marked features generated by performing feature extraction on the retina image, wherein the marked features correspond to local features which are used for ground-truth analysis of the retina image; dividing both the saliency map and the feature map into cells in order to obtain segmented saliency map and a segmented feature map, each cell covering an area with a plurality of pixels, wherein a relevance score is assigned to each cell based on values of individual pixels within the cells in the saliency map and feature map; selecting, for both the segmented saliency map and segmented feature map, a selected number of selected cells corresponding to the most relevant cells having highest relevance scores within the segmented saliency map and the segmented feature map, respectively; and computing a level of agreement between the segmented saliency map and the segmented feature map by comparing the selected cells having highest relevance scores in the segmented saliency map to the selected cells having highest relevance scores in the segmented feature map.

Explainability methods (i.e. heatmapping technique) can be employed with artificial neural networks in order to determine which parts of an input image are mainly used in order to arrive at the output of the neural network (e.g. classification output). Typically, the explainability methods create heat maps highlighting regions in the image that contributed the most to the prediction, thus providing a way to explain decisions made by the neural networks. The invention relates to objectively quantifying the performance of the explainability methods used with different neural network architectures. A score/metric is defined which can objectively quantify how well the regions highlighted by the heatmapping technique (cf. explainability method) match the regions of interest marked by a human expert (ground truth).

Ground-truth markings of an image (carried out by a human expert) may be obtained in which the markings indicate regions linked to some features which are used for classifying the image (e.g. classification of an eye disease using features such as microaneurysms, hard exudates, soft exudates, etc.). Further, a computer-generated saliency map (e.g. heatmap) may be obtained using the heatmapping technique (cf. explainability method). Both the ground-truth images with the marked features and computer-generated heatmap may be divided into cells (cf. segmentation) for enabling a comparison. The maps may be similarly divided into cells (e.g. a same or similar mesh, e.g. 10x10 pixels, e.g. 10 by 10 cells, etc.). It is possible to select only the most relevant cells, e.g. only the top number of 15 cells which were most used for coming to the classification. The discretized ground-truth feature map and computer-generated heatmap can be compared, only taking into account a number of most relevant cells. Furthermore, a level of agreement can be computed between the two discretized maps by giving a score/metric.

For a certain application (e.g. detection of eye diseases by analyzing images of the eye), it can be determined which neural network architecture combined with which heat mapping technique (cf. explainability method) provides the best results (highest agreement score/metric). Such an improved combination can then be used for that application.

It will be appreciated that the feature map can be a map with actual relevant features used for ground-truth analysis of the image marked. These markings may be performed in different ways. For example, a human-expert may be involved in generating the ground-truth feature map.

It will be appreciated that the explainability method may provide for an attention-based model, which enables to see what parts of the image the model focuses on as it generates an output (e.g. caption, classification, probability, etc.).

It will be appreciated that the number of cells can be effectively selected (cf. selected number of cells). Furthermore, also actual cells (e.g. only most relevant cells having highest relevance score) can be selected (cf. selected cells) for comparison.

Optionally, the level of agreement is determined by calculating an agreement score based on a number of matching cells of the selected cells in the segmented saliency map and the segmented feature map.

The level of agreement can be an agreement score providing for a metric which can be easily comparable to a ground-truth analysis (e.g. provided by a human annotator or by a human analysis), in order to determine whether the employed artificial neural network of the machine learning model uses the same data which a human annotator (e.g. expert) would use to arrive at the analysis and/or classification. It can be better ensured that an explainability method employed with a particular artificial neural network model provides better results (e.g. heatmaps) compared to feature maps with ground-truth features marked therein (i.e. locations or regions where the human annotator (e.g. specialist) looks or would look to arrive at his analysis and/or diagnosis.

Optionally, the agreement score is calculated by dividing the number of matching cells by the selected number of cells selected for comparison.

The matching cells can be determined by comparing the saliency maps with ground-truth marking map (i.e. feature map), which can for instance be provided by ground-truth analysis performed by a medical expert. For this purpose, both the saliency map and the ground-truth marking map (e.g. expert segmentations in the feature map) can be discretized, and subsequently the agreement score can be computed between the two discretized maps. In this way, it can be objectively determined to which level the saliency map provided by means of the employed explainability method corresponds to the feature map.

Optionally, the feature map includes at least a first feature class and a second feature class, the first feature class being different from the second feature class, and wherein the first feature class and second feature class are given different weights, wherein the relevance score assigned to each cell is at least partially based on the respective weights.

Each type of marking in the feature map may be provided with a certain weight, e.g. some features in the image may be small, but may have a higher importance for the classification, thus given a higher weight. Otherwise, small but highly relevant features would not sufficiently be taken into account for determining the agreement score/metric. For instance, some marked features (e.g. soft exudates) can have rather smaller relative dimensions (e.g. typically covering small areas in the marked feature map, compared to other marked features). By assigning more weight to these features when assigning relevance scores to cells of the discretized/segmented feature map, these features can be taken into account in a balanced way. For instance, the values of the individual cells may be proportional to the weight and the actual value of the marked pixels in the feature map.

In some examples, a plurality of feature classes are marked in the feature map. These feature classes can have different characteristics which can be translated into weights for obtaining a more objective comparison between the saliency map and the feature map. The weights can be tuned in order to take into account the typical sizes linked to the feature classes. For instance, some feature classes of the plurality of feature classes may tend to be small regions in the image, while other feature classes of the plurality of feature classes may tend to be larger regions in the image. In some examples, the weights may be chosen in order to at least partially compensate for the relative size differences. For this purpose, for example an average size can be associated with each feature class, for example based on statistical determinations, empirical models. In some examples, the weights can be selected and tuned as parameters. It is also envisaged that default weights are provided (for example based on typical sizes of features in the feature classes), wherein the weights are adjustable (e.g. fine-tuned) depending on the case. For example, if in the retina image most marked features are associated with one feature class, the weight of the feature class may be reduced, in order to more take into account more rare features marked in the feature map.

Optionally, the first feature class includes features typically having smaller surface areas in the retina image than features in the second feature class, and wherein the marked areas of the first feature class are provided with higher weights to compensate for the smaller surface areas.

The compensation can be performed in different ways, for instance by adjusting the relevance score accordingly. Other computational adjustment based on the weights can also be performed.

Optionally, a size of marked features in the segmented feature map is adjusted based on its respective weight.

The new feature map with changed relative sizes of marked features may enable a more objective comparison between the segmented feature map and the segmented saliency map.

Optionally, the feature map includes at least three different feature classes, more preferably at least four different feature classes.

The number of feature classes which can be marked in the image (e.g. retina image, or other medical image) may depend on the application. For example, the different feature classes may be used for to infer or analyze a condition of the subjects.

Optionally, the feature map includes at least two feature classes of a group consisting of at least: soft exudates, hard exudates, microaneurysms, intraretinal hemorrhages, pre-retinal hemorrhages, venous beadings, intraretinal microvascular abnormalities (or IrMAs), drusen, retinal nerve fiber layers defects, peripapillary atrophy, peripapillary edema, peripapillary hemorrhage, peripapillary atrophy, macular edema, choroidal neovascularization, retinal vein occlusion, laser marks, geographic atrophy, and neovascularization.

Optionally, the saliency map is in a form of a heatmap overlayable on the retina image, wherein high intensity in the heatmap reflects an importance of regions in the image in their contributions towards the output of the trained artificial neural network of the machine learning model.

In some examples, a superimposed image can be generated that superimposes the original image on the heatmap, or vice versa. The visualization techniques provided by the explainability methods can answer important questions, such as why did the artificial neural network think that the image (e.g. retina image) contained certain features, for example indicative of a medical condition, and/or where one or more detected features are located in the image. For example, it can be seen which input nodes of the artificial neural network (corresponding to particular regions of the input medical image) are strongly activated.

Optionally, the heatmap can be normalized between 0 and 1, for example for visualization purposed.

Optionally, a plurality of saliency maps are received generated by applying different explainability methods and/or different trained artificial neural networks, wherein, for each saliency map of the plurality of saliency maps, a corresponding level of agreement between the respective saliency map and the feature map is computed in order to determine a combination of explainability method and trained artificial neural network which results in the highest level of agreement.

By evaluating a plurality of explainability method and artificial neural network combinations, it can be determined which combination provides better results for the application for which the trained neural networks are used.

Optionally, the selected number of most relevant cells is in a range between 3 and 50 percent of a total number of cells present in both the segmented saliency map and segmented feature map, more preferably is in a range between 5 and 30 percent of the total number of cells, even more preferably is in a range between 10 and 20 percent of the total number of cells.

By comparing only a limited number of cells in the segmented feature map and segmented saliency map, the limited number of cells having relatively higher relevancy scores, it is possible to significantly improve the objective evaluation of the explainability methods used in combination with the trained artificial neural network.

Optionally, the selected number of cells is set to a predefined number of cells if the predefined number of cells is smaller or equal to a total number of cells having a relevance score above a predetermined threshold, wherein the selected number of cells is set to the total number of cells having a relevance score above the predetermined threshold if the predefined number of cells is larger than the total number of cells having a relevance score above the predetermined threshold.

If the number of cells in which features are present in the feature map is lower than the predetermined number of cells, the number of cells in which features are present in the feature map can be used instead. In this way, an objective evaluation can be carried out, even if only a limited number of cells in segmented saliency map and/or segmented feature map have relevance scores above the predetermined threshold. It can thus be prevented that cells with too low relevance scores are used in computing the level of agreement.

Optionally the segmented saliency map and segmented feature map each have a total number of cells in a range between 9 and 2500. For example, dividing the images into 3 by 3 cells resulting in a total number of cells of 9, or dividing the images into 50 by 50 cells resulting in a total number of cells of 2500. Various other segmentations are also possible, for example between 3 by 3 cells and 50 by 50 cells, e.g. 5 by 5, 8 by 8, 10 by 10, 15 by 15, 20 by 20, 25 by 25, etc. It is also possible that images are segmented asymmetrically, for example 5 by 3, 10 by 5, 8 by 5, 2 by 5, etc.

The saliency map and feature map may be segmented for example in 5x5 cells, 10x10 cells, 15x15 cells, 20x20 cells, 30x30 cells, 40x40 cells, 50x50 cells, etc. In some examples the segmentation is in a range between 5x5 and 50x50 cells. Other segmentations are also possible, e.g. 5x10 cells, 10x5 cells, 10x15 cells, etc. The segmentation can also depend on the resolution of the retina image. In various examples, the retina image has a square shape, however, other shapes are also possible (e.g. rectangular).

Optionally, each cell includes at least 25 pixels, more preferably at least 64 pixels, even more preferably at least 100 pixels. Such grouping of pixels per cell can provide an enhanced evaluation.

In some examples, the saliency map and feature map is segmented into a grid with rectangular grid with a similar or same shape. Other grid shapes are also possible, e.g. triangular, pentagonal, hexagonal, etc. In some examples, the grid is structured. In various examples, the cells have the same size.

Optionally, the trained artificial neural network is a trained deep learning network configured to receive the image of the retina as input, and to provide a classification or regression of the image of the retina as output.

Various deep learning network architectures can be used. In some examples, the artificial deep neural network may have a plurality of classifications.

Advantageously, the invention can result in an improved explainability provided by the explainability methods used with the selected deep learning machine learning models for medical image analysis. It will be appreciated that the invention can also be used for with other medical images instead of retina images. Different medical imaging techniques may be used, such as for instance magnetic resonance imaging, positron emission tomography, X-ray, etc. The invention is not necessarily limited to analysis of images of the retina of eyes of subjects.

Optionally, the trained artificial neural network is configured to classify images of retina of eyes such as to infer or further analyze a condition of the subjects, such as a vision-related.

The analysis of the retina images can be used for detecting various eye diseases (e.g. age related macular degeneration and diabetic macular edema) or other medical non-eye related conditions of the subject.

According to an aspect, the invention provides for a computer-implemented method of evaluating a performance of explainability methods used with artificial neural network models which are configured to classify images of retina of eyes of subjects, the method comprising operating one or more hardware processors to: receive a saliency map of a retina image generated by applying explainability method on a trained artificial neural network of a machine learning model, the trained artificial neural network being configured to perform image analysis on the retina image; receive a feature map of the retina image with marked features generated by performing feature extraction on the retina image, wherein the marked features correspond to local features which are used for ground-truth analysis of the retina image; divide both the saliency map and the feature map into cells in order to obtain segmented saliency map and a segmented feature map, each cell covering an area with a plurality of pixels, wherein a relevance score is assigned to each cell based on values of individual pixels within the cells in the saliency map and feature map; select, for both the segmented saliency map and segmented feature map, a selected number of selected cells corresponding to the most relevant cells having highest relevance scores within the segmented saliency map and the segmented feature map, respectively; and compute a level of agreement between the segmented saliency map and the segmented feature map by comparing the selected cells having highest relevance scores in the segmented saliency map to the selected cells having highest relevance scores in the segmented feature map.

Deep convolutional neural networks can obtain human-level performance on diabetic retinopathy (DR) scoring from fundus images. These models, however, may operate as black boxes: their inner workings are hard to interpret, and they provide no explanation as to how a certain prediction is made. Typically, explainability methods (e.g. heatmapping techniques) have been developed to explain predictions made by neural networks. However, it is often not clear which one to use because individual techniques have been mainly used in a descriptive way without an objective and systematic comparison. Advantageously, an agreement score/metric can be computed to quantify a correspondence of saliency maps (e.g. heatmaps) to the retinal areas of interest for human DR graders (e.g. areas with DR lesions). This score/metric can be seen as an explainability consistency score between the saliency maps and (ground-truth) feature map. The claimed invention provides for several exemplary explainability methods which are evaluated in combination with different artificial neural network architectures for analysis of retina images (e.g. DR detection). Exemplary explainability methods are known in the art, such as for example Integrated Gradients, Grad-CAM, and Layerwise Relevance Propagation, however, other explainability methods or techniques for use with artificial neural networks can also be used. Advantageously, high-quality saliency maps (e.g. heatmaps) can be obtained from explainability methods, since the choice of the explainability technique and network architecture can be crucial for obtaining high-quality saliency maps. There exists a significant interplay between network architecture and explainability method. An improved combination of explainability method and artificial neural network can be determined which can result in an improved overlap between saliency maps and ground-truth annotations (e.g. expert annotations). Although various examples relate to diabetic retinopathy, it is envisaged that the method and system of the invention can be used for other applications also.

A plurality of explainability methods can be tested in order to select the explainability method which provides salience maps (e.g. heat maps) corresponding better to the locations where the specialist would look to arrive at his analysis results (e.g. classifying a condition, diagnosis, etc.).

The agreement score provides for a metric which can be easily comparable to a ground-truth analysis (e.g. provided by a human annotator or by a human analysis), in order to determine whether the employed artificial neural network of the machine learning model uses the same data which a human annotator (e.g. expert) would use to arrive at the analysis and/or classification. It can be better ensured that an explainability method employed with a particular artificial neural network model provides better results (e.g. heatmaps) compared to feature maps with ground-truth features marked therein (i.e. locations or regions where the human annotator (e.g. specialist) looks or would look to arrive at his analysis and/or diagnosis).

The artificial neural networks may be configured to classify image of retina of eyes of subjects. However, it will be appreciated that different types of machine learning models can be employed, for instance classification models, regression models, etc. For example, the trained artificial neural network can be configured to perform image analysis on the retina image with classification or regression machine learning models.

According to an aspect, the invention provides for a computer-readable medium for storing instructions for performing the method according to the invention.

According to an aspect, the invention provides for a non-transitory computer-readable medium with software instructions that, when executed, causes performing the method according to the invention.

According to an aspect, the invention provides for a computing system and computer implemented method configured to evaluate a performance of explainability methods used with artificial neural networks which are configured to analyze medical images of subjects, the system including one or more hardware computer processors, and one more storage devices configured to store software instructions configured for execution by the one or more hardware computer processors in order to cause the system to: receiving a saliency map of a medical image generated by applying explainability method on a trained artificial neural network of a machine learning model, the trained artificial neural network being configured to perform image analysis on the medical image; receiving a feature map of the medical image with marked features generated by performing feature extraction on the medical image, wherein the marked features correspond to local features which are used for ground-truth analysis of the medical image, for example to infer a condition of the subject; dividing both the saliency map and the feature map into cells in order to obtain segmented saliency map and a segmented feature map, each cell covering an area with a plurality of pixels, wherein a relevance score is assigned to each cell based on values of individual pixels within the cells in the saliency map and feature map; selecting, for both the segmented saliency map and segmented feature map, a predetermined number of cells corresponding to the most relevant cells having highest relevance scores within the segmented saliency map and the segmented feature map, respectively; and computing a level of agreement between the segmented saliency map and the segmented feature map by comparing the selected predetermined number of most relevant cells having highest relevance scores in the segmented saliency map to the selected predetermined number of most relevant cells having highest relevance scores in the segmented feature map.

The invention may provide for an explainability consistency score for evaluating explainability methods used with artificial neural networks (e.g. heatmapping techniques providing indications most relevant data for obtaining an output of the artificial neural network).

The agreement score can provide a metric to determine the best explainability method with a predetermined artificial neural network architecture trained for analysis of retina images, e.g. for the application of screening of diabetic retinopathy. In this way, an optimal explainability method and neural network architecture combination can be selected, providing for the highest agreement score for instance. It will be appreciated that the invention can be employed for different applications involving analysis of retina images, e.g. analysis of retina images from Optical Coherence Tomography scanning (e.g. OCT slices).

It will be appreciated that the invention can be used for analysis of various types of medical images, for instance retina images (also called fundus images), body images, skin images, internal images of the body. Various combinations of different images are also possible. Different imaging techniques can be used for taking the images, for instance a camera, a positron emission tomography (PET) imaging system, magnetic resonance imaging (MRI) system, a computed tomography (CT) imaging system, X-ray imaging system, optical coherence tomography (OCT) imaging system, Röntgen scanner imaging system, single-photon emission computed tomography (SPECT) imaging system, etc. Various other medical imaging systems may also be used, for instance based on radiology, interferometry, tomography, optical heterodyne arrangements, ultrasound, elastography, endoscopy, tactile imaging, thermography, biological imaging, nuclear medicine functional imaging techniques e.g. involving application of radioactive substances, etc. Hybrid imaging methods can also be used for obtaining the medical images, for instance PET/CT, PET/MRI. It is also envisaged that multiple medical images obtained by means of multiple imaging systems are overlaid or fused to obtain a single medical image. For example, a retina/fundus image obtained by means of a camera may be combined with an image obtained by means of an OCT imaging system.

A medical image may be obtained by various techniques and processes of creating visual representations of the exterior and/or interior of a body of a subject, for example for clinical analysis and determination of one or more medical conditions. For example, the medical images may provide a visual representation of the function of some organs or tissues (physiology). The medical images may be used for revealing structures detectable and linked to medical conditions. For example, the structures may be internal structures hidden by the skin and bones, a pattern present in the retina image, etc. Optionally, the analysis may subsequently be used for instance for diagnosing and treat diseases.

The feature extraction performed on the medical image (e.g. retina image) may be performed by a human annotator (e.g. expert). In some examples the feature map of the medical image is generated by performing handcrafted feature extraction. However, other techniques may also be used, such as for example eye-tracking. The human annotator may also use tools with already marked features, which he/she can edit for ground-truth analysis of the medical image. In some examples, no human annotator is used. For example, the feature map may be derived automatically from one or more medical imaging techniques using an image different from the retina image. In these examples, the different image may for instance be taken using a different technique or hardware (e.g. Angio Optical Coherence Tomography, fluorescein angiography). Various other implementations are also envisaged.

It will be appreciated that the medical images can be interpreted to incorporate also data obtained by means of measurement and recording techniques that are not primarily designed to produce images, such as for example electroencephalography (EEG), magnetoencephalography (MEG), electrocardiography (ECG), and others. For instance data representing data susceptible to representation as a parameter graph vs. time or maps that contain data about the measurement locations can be also considered as medical images in the context of the invention. The invention can be applied analogously by dividing the time data in intervals (cf. one dimensional cells).

It will be further understood that when a particular step of a method is referred to as subsequent to another step, it can directly follow said other step or one or more intermediate steps may be carried out before carrying out the particular step, unless specified otherwise. Likewise it will be understood that when a connection between components such as neurons of the neural network is described, this connection may be established directly or through intermediate components such as other neurons or logical operations, unless specified otherwise or excluded by the context.

Some embodiments may be implemented, for example, using a machine or tangible computer-readable medium or article which may store an instruction or a set of instructions that, if executed by a machine, may cause the machine to perform a method and/or operations in accordance with the embodiments.

It will be appreciated that any of the aspects, features and options described in view of the system apply equally to the method and the described computer program product. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.
In the drawing:

Fig. 1 shows a schematic diagram of a computer implemented method;
Fig. 2 shows a schematic diagram of a retina image and an overlay feature map;
Fig. 3 shows a schematic diagram of a computer implemented method;
Fig. 4 shows a schematic diagram of a graph with exemplary agreement level scores;
Fig. 5 shows a schematic diagram of exemplary evaluations; and
Fig. 6 shows a schematic diagram of a graph with exemplary agreement level scores.

DETAILED DESCRIPTION

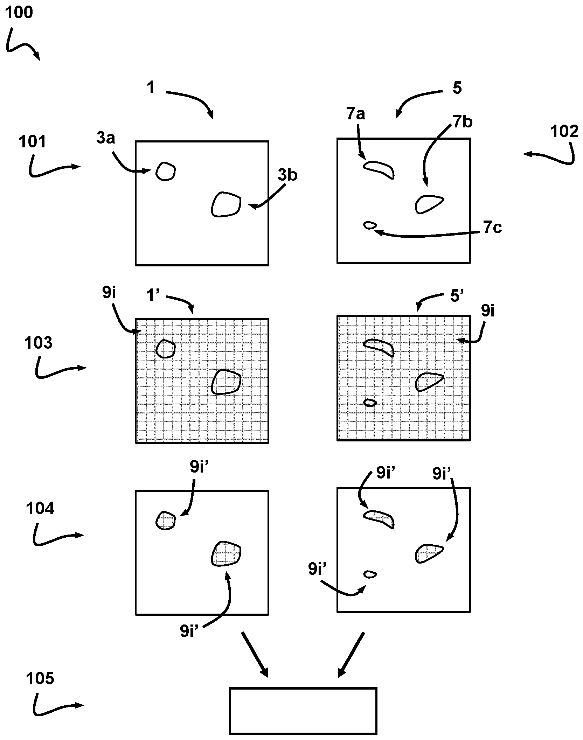

Fig. 1 shows a schematic diagram of a computer implemented method for evaluating a performance of explainability methods used with artificial neural networks which are configured to analyze images of medical images, in this example images of retina of eyes of subjects. The computer implemented method may be carried out by means of a computing system including one or more hardware computer processors, and one more storage devices configured to store software instructions configured for execution by the one or more hardware computer processors in order to cause the system to perform the computer implemented method steps. In a first step 101, a saliency map 1 of a retina image may be received, the saliency map being generated by applying explainability method on a trained artificial neural network. The trained artificial neural network may be configured to perform image analysis on the retina image. In this example, the saliency map 1 is a heatmap which can be overlayable over the image of the retina in order to determine which regions of the retina image were most relevant for the generated output of the trained artificial neural network. In this example, the generated heatmap includes two highlighted regions 3a and 3b. In a second step 102, a feature map 5 of the retina image may be received, the feature map having marked features 7a, 7b, 7c generated by performing feature extraction on the retina image. The marked features 7a, 7b, 7c may correspond to local features identified in the retina image which are used for ground-truth analysis (e.g. determine a condition of a subject) of the retina image. In a third step 103, both the saliency map 1 and the feature map 5 may be divided into cells 9i in order to obtain segmented saliency map 1' and a segmented feature 5' map. Each cell 9i may cover an area with a plurality of pixels therein. Furthermore, a relevance score may be assigned to each cell based on values of individual pixels within the cells 9i in the saliency map 1 and feature map 5. In a fourth step 104, a selected number of selected cells 9i' corresponding to the most relevant cells having highest relevance scores within the segmented saliency map 1' and the segmented feature map 5' may be selected, respectively for both the segmented saliency map 1' and segmented feature map 5'. In a fifth step 105, a level of agreement is computed between the segmented saliency map and the segmented feature map by comparing the selected cells having highest relevance scores in the segmented saliency map to the selected cells having highest relevance scores in the segmented feature map.
The invention enables an advantageous way of computing an agreement between the segmented maps which are divided into a plurality of cells, i.e. the segmented saliency map and segmented feature map. In some examples, the number of matching cells (present in the top selected cells in the segmented saliency map and segmented feature map) is divided by the total number of top cells selected, e.g. the predetermined top number of cells (e.g. 15 top cells selected both in the segmented saliency map and segmented feature map). In some examples, the obtained metric/score is normalized between 0 and 1.
Advantageously, the invention can provide for an explainability consistency score for evaluating explainability methods (e.g. heatmapping techniques), for example in diabetic retinopathy machine learning models (e.g. trained deep learning artificial neural networks).

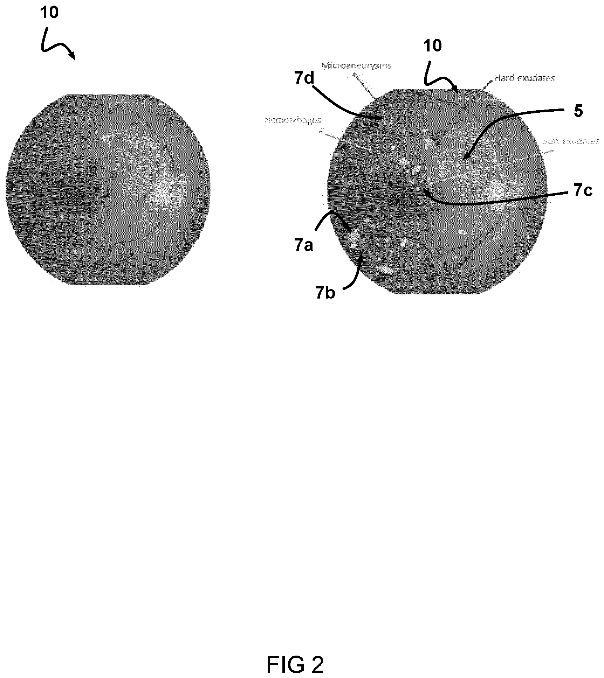

Fig. 2 shows a schematic diagram of a retina image 10 and a feature map 5 overlaid on the retina image. The feature map 5 has exemplary marked features corresponding to local features in the retina image which were used for performing a ground-truth analysis (e.g. expert segmentation for determining medical condition).

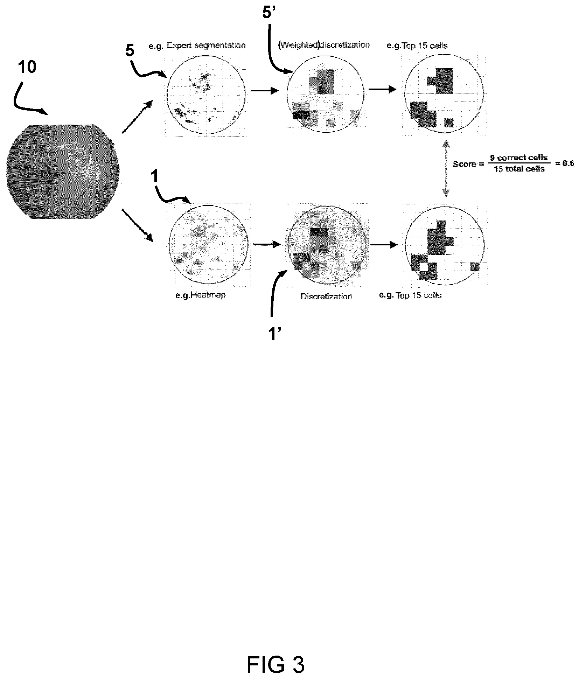

In fig. 2, an exemplary feature map 5 with marked features 7a, 7b, 7c, 7d, which were used for the analysis and/or classification by a human annotator is shown. In this example, pixel-level annotations are provided in the feature map 5 which is overlaid on the retina image 10. Four types of lesions are annotated in this example, namely hemorrhages (cf. features 7a), hard exudates (cf. features 7b), soft exudates (cf. features 7c) and microaneurysms (cf. features 7d). In this example, the agreement score represents an explainability consistency score to compare the saliency maps (e.g. heatmaps, not shown in fig. 2) to ground-truth lesion markings by experts in overlayable feature map 5. In some examples, the computation of the agreement score may comprise at least two steps. In a first step, the feature map 5 (e.g. provided by expert marking) and the computer-generated saliency map (e.g. heatmap generated by an explainability method) can be discretized into cells (e.g. including a window covering multiple pixels in the retina image). In a second step, the agreement between the two discretized maps, namely the segmented saliency map and the segmented feature map, can be computed. This is further illustrated in fig. 3.

Optionally, a deep learning (DL) model is employed for analysis of the retina image. Deep learning models can achieve excellent diagnostic performance on a wide range of medical image analysis tasks, but state-of-the-art models may operate as black boxes. Often, it is desired to explain how and why a trained machine learning model such as an artificial neural network model made a certain analysis, prediction and/or classification. In this respect, a wide range of explainability methods exist in the art. These methods typically produce heatmaps to highlight regions in the image that contributed most to the prediction. Being able to explain model decisions is important for several reasons. Heatmaps help to build trust in the model when they corroborate clinically relevant features. Furthermore, they can expose failure modes or hidden biases, and hence suggest how models can be improved. For example, by inspecting heatmaps, it can be demonstrated that surgical skin markings in dermoscopic images significantly influence neural network predictions. Moreover, experts can use explanations to discover novel knowledge, for example to uncover the features that artificial neural networks effectively use to predict sex from fundus images.

In some examples, the explainability in the context of diabetic retinopathy (DR) grading, a task for which various developed DL models exist with rather excellent diagnostic performance already exist, can be investigated. DR is a common complication of diabetes, and the leading cause of blindness among working-age adults around the world. The presence of lesions such as microaneurysms, hemorrhages, hard exudates, venous beading and other microvascular abnormalities are used by trained graders to score DR severity. Depending on the location and type of these lesions, the International Clinical Diabetic Retinopathy Scale assigns one of 5 DR stages ranging from 'no apparent retinopathy' to 'severe proliferative DR'. Automated grading could significantly benefit efficiency, reproducibility and coverage of DR screening programs. Several studies on deep learning for DR grading have used heatmaps to explain model predictions. However, none of them have made an attempt to quantify the performance of the explainability methods. Studies typically present results for a small selection of images and a single explainability method. However, it is known that results may vary significantly between images and methods.

The invention provides for a systematic and objective comparison of different explainability methods, for example in the context of DR. Each technique can be combined with a deep learning network architecture (e.g. VGG16, InceptionV3 and ResNet50) to investigate the impact of the network on the quality of the heatmaps. The objective evaluations can be done with a metric relating to an explainability consistency. This metric/score may quantify how well the regions highlighted by the heatmapping technique match the regions of interest for expert DR graders. It may be observed that there exists a significant interplay between network architecture and explainability method. It will be appreciated that the invention can also be employed in other contexts, for instance for magnetic resonance imaging (MRI) results, positron emission tomography (PET), etc.

Fig. 3 shows a schematic diagram of a computer implemented method applied on an exemplary image of a retina. The invention may provide for an explainability consistency score (cf. level of agreement between selected cells in the segmented feature map and segmented saliency map, respectively) for evaluating explainability methods used with artificial neural networks (e.g. heatmapping techniques providing indications of most relevant data for obtaining an output of the artificial neural network). The agreement score can provide a metric to determine the best explainability method with a predetermined artificial neural network architecture trained for analysis of retina images, e.g. for the application of screening of diabetic retinopathy. In this way, an optimal explainability method and neural network architecture combination can be selected, providing for the highest agreement score for instance. It will be appreciated that the invention can be employed for different applications involving analysis of retina images, e.g. analysis of retina images from Optical Coherence Tomography scanning (e.g. OCT slices). Other imaging techniques are also envisaged for obtaining the retina image.

A plurality of explainability methods can be tested in order to select the explainability method which provides salience maps (e.g. heat maps) corresponding better to the locations where the specialist would look to arrive at his analysis results (e.g. classifying a condition, diagnosis, etc.).

The segmentation of the saliency map 1 and the feature map 5 into cells can be performed in different ways. Typically it involves a regular discretization in rectangular cells for both the saliency map 1 and the feature map 5 to obtain the segmented saliency map 1' and the segmented feature map 5', respectively. Different sizes and shapes of cells can be used. It is also possible that the input image has other dimensions, shapes or relevant zones. In this example, the relevant zone of the retina image is substantially circular. Employing a same discretization for both maps 1, 5 can allow for an easier comparison therebetween. The feature map 5 including the expert markings of the local features can be discretized by overlaying the retina/fundus image with a grid and counting the number of lesion pixels in each cell. An example of a 10x10 grid overlaid to one of the retina/fundus images is given in fig. 3. The pixel count can be weighted by the lesion types to deal with severe pixel count imbalance between lesion types: in the markings of the identified features in the feature map of the retina/fundus image. The markings may be provided at least partially by an expert (e.g. by performing a manual analysis). Such data feature maps may also be available in datasets. In this exemplary feature map, 1% of the pixels indicated as lesions (e.g. by the expert(s)) correspond to microaneurysms, 8% correspond to soft exudates, 44% correspond to hard exudates and 47% correspond to hemorrhages. Taking the different sizes and/or shapes of the marked features in the feature map into account can provide for important advantages. For example, not taking the size/shape imbalance into account may potentially lead to microaneurysms barely contributing to the agreement score, while they can be important or sometimes even crucial for identifying early stages of DR diagnosis.

In this example, the marking/segmentation of hemorrhages can be denoted as a matrix as $HE \in \mathbb{R}^{NxN}$, with $HE_{i,j}$ = 1 if the presence of a hemorrhage at that pixel was indicated (e.g. by an human annotator/expert) and $HE_{i,j}$ = 0 otherwise. Similarly, *MA* describes microaneurysms, *EX* hard exudates and *SE* soft exudates. The discretized expert marking/segmentation *DE* combines these four matrices into one by taking weighted sums of these segmentation matrices in grid cells. For an *SxS* grid, $DE_{i,j}$ for $i,j \in 1..S$ of the discretized expert marking/segmentation can be computed as follows:

$$DE_{i,j} = w_{HE} \sum_{p=id}^{(i+1)d-1} \sum_{q=jd}^{(j+1)d-1} HE_{p,q} + w_{MA} \sum_{p=id}^{(i+1)d-1} \sum_{q=jd}^{(j+1)d-1} MA_{p,q}$$

$$+ w_{SE} \sum_{p=id}^{(i+1)d-1} \sum_{q=jd}^{(j+1)d-1} SE_{p,q} + w_{EX} \sum_{p=id}^{(i+1)d-1} \sum_{q=jd}^{(j+1)d-1} EX_{p,q}$$

with $d = \frac{N}{S}$ the width/height of a cell, and $w_{HE}$, $w_{MA}$, $w_{SE}$ and $w_{EX}$ the weights for hemorrhages, microaneurysms, soft exudates and hard exudates. The weight for each lesion type can be determined by its pixel count over all training images, relative to the pixel count of the most frequently occurring lesion type. This resulted to the following weights for the exemplary data set used (e.g. IDRiD dataset): $w_{HE}$ = 1, $w_{EX}$ = 1.05, $w_{SE}$ = 5.77 and $w_{MA}$ = 46.97.

The discretization of the saliency map 1 (e.g. heatmap) to obtain the segmented saliency map 1' can be computed in a similar manner. However, this can be performed for example without weighting, as heatmaps may not distinguish between different lesion types. Often, the explainability methods used with artificial neural networks indicate which regions of the input was most relevant for generating the output. For a heatmap $H \in R^{NxN}$ entry $DH_{i,j}$ for i,j $\in$ 1..S of the discretized heatmap $DH \in R^{SxS}$ can be computed as follows:

$$DH_{i,j} = \sum_{p=id}^{(i+1)d-1} \sum_{q=jd}^{(j+1)d-1} H_{p,q}$$

In a subsequent step, an agreement between the discretized maps 1', 5' can be effectively calculated. The agreement between the discretized expert marking/segmentation in the feature map and the discretized saliency map (e.g. heatmap) can be computed as follows:

$$ECS(DE, DH) = \frac{|top\_k\_cells(DE, K) \cap top\_k\_cells(DH, K)|}{\min(K, n\_nonzero\_elements(DE))}$$

*top_k_cells* is a helper function that returns the row and column indices of the *K* cells with the highest value (e.g. top 15 cells). *n_nonzero_elements* returns the number of nonzero elements in a matrix. Dividing by *K* (or the number of nonzero elements in the discretized expert segmentation if this is smaller than K) results in the ECS (cf. agreement score) always taking values in a range [0,1] (normalization) and can be interpreted as a percentage. Fig. 3 shows different steps the computation of the agreement score (e.g. ECS score). In this example, the retina image is divided into a 10x10 grid with square cells. Other types of segmentations into cells are also envisaged. The cells may have other sizes and/or other shapes. It is also envisaged that multiple grids are used for comparison.

The example provided in fig. 3 relates to an image of a retina of a subject. However, it is also envisaged that other images are used, for instance medical images (e.g. images obtained by means of MRI, PET, CT, PET/MRI, PET/CT, X-ray, etc.)

Saliency maps 1 (e.g. heatmaps) generated by means of one or more explainability methods can be instrumental to explain predictions made by artificial neural networks (e.g. deep neural networks configured to perform analysis on input images). For example, the explainability methods can be used in order to visualize most relevant data in the retina input image for machine learning models configured to analyze, detect medical conditions of the subject (e.g. DR detection). The invention provides for an objective evaluation of explainability methods by objectively comparing the created saliency maps (e.g. heatmaps) to the regions of interest used for ground-truth analysis or condition determination (e.g. for expert DR graders, locations with DR lesions) in the feature maps. The maps are segmented into cells (e.g. grid, mesh), and a selected number of cells of the maps are respectively compared to each other. The agreement score/metric (e.g. ECS) provides for an objective comparison between the explainability methods. This score/metric can be tailored to DR scoring for example. However, it can also be used with other medical images and/or for other conditions. The choice of the explainability method and network architecture are important for various applications. These two factors (cf. combination) interact. The selection of combinations can provide significant advantages to expert practitioners using machine learning models for analysis of medical images, and/or at least partially as an aiding tool for arriving at an analysis.

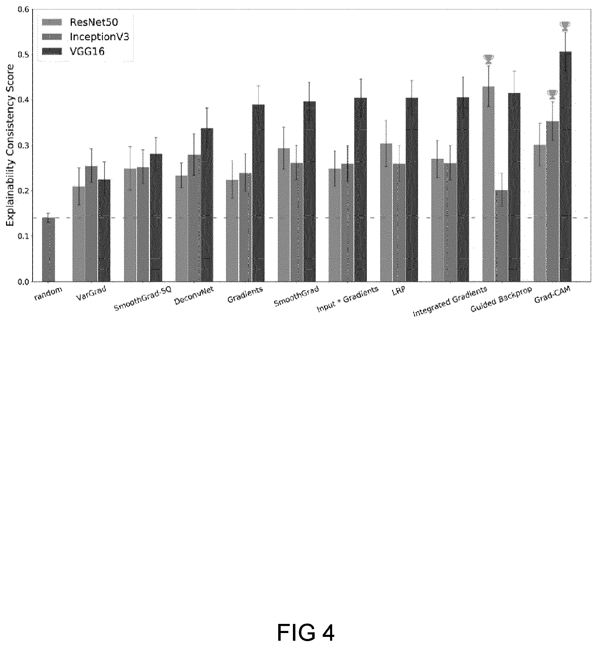

Fig. 4 shows a schematic diagram of a graph with exemplary agreement level scores. Various explainability methods can be used in conjunction with the employed artificial neural networks. Table 1 below lists various exemplary explainability methods.

*Table 1: Explainability methods used in the exemplary experiments.*

| Explainability method | Reference |
|---|---|
| Gradients | (Simonyan, K., Vedaldi, A., & Zisserman, A. (2013). Deep inside convolutional networks: Visualising image classification models and saliency maps. ICLR.) |
| Integrated Gradients | (Sundararajan, M., Taly, A., & Yan, Q. (2017). Axiomatic Attribution for Deep Networks. International Conference on Machine Learning) |
| Input * Gradient | (Shrikumar, A., Greenside, P., & Kundaje, A. (2017). Learning important features through propagating activation differences. International Conference on Machine Learning.) |
| Guided Backpropagation | (Springerberger, J., Dosovitskiy, A., Brox, T., & Riedmiller, M. (2015). Striving for simplicity: the all convolutional net. Workshop contribution at the International Conference on Learning Representations. |
| Layerwise Relevance Propagation (LRP) | (Bach, S., Binder, A., Montavon, G., Klauschen, F., Muller, K., & Samek, W. (2015). On pixel-wise explanations for non-linear classifier decisions by layerwise relevance propagation. PLOS ONE.) |
| Grad-CAM | (Selvaraju, R. R., Cogswell, M., Das, A., Vedantam, R., Parikh, D., & Batra, D. (2016). Grad-CAM: Visual Explanations from Deep Networks via Gradient-based Localization. International Journal of Computer Vision) |
| DeconvNet | (Zeiler, M., & Fergus, R. (2014). Visualizing and understanding convolutional networks. ECCV.) |
| SmoothGrad | (Smilkov, D., Thorat, N., Kim. B., Viegas, F., & Wattenberg, M. (2017). Smoothgrad: removing noise by adding noise. Workshop on Visualization for Deep Learning at ICML.) |
| Smooth Grad-Squared | (Hooker, S., Erhan, D., Kindermans, P., & Kim, B. (2019). A benchmark for interpretability methods in deep neural networks. Conference on Neural Information Processing Systems.) |
| VarGrad | (Hooker, S., Erhan, D., Kindermans, P., & Kim, B. (2019). A benchmark for interpretability methods in deep neural networks. Conference on Neural Information Processing Systems.) |

In Grad-CAM the layer to visualize the filters can be defined. Other explainability method examples are Gradients method, DeconvNet, Guided Backpropagation, Integrated Gradients, Input*Gradients and layerwise relevance propagation (LRP). Various other explainability methods may be employed. Custom implementations of known methods are also possible, e.g. SmoothGrad, SmoothGrad-Squared and VarGrad. The explainability methods may rely on the same or different libraries for performing calculations. LRP can for example be applied using several variants and parameter configurations. In some examples, a configuration can be selected which produced the best results in the training set for each architecture. In some examples, this was LRP-Alpha2Beta1-IgnoreBias for VGG16, LRP-Alpha1Beta0-Ignore-Bias for ResNet50 and LRP-Z for InceptionV3. For explainability methods that produce a heatmap with 3 channels (all of them in the above examples, except Grad-CAM), the output can be converted to a single channel heatmap by taking the maximum over the channels. In fig. 4, exemplary agreement scores (cf. average ECS scores) are provided for different artificial neural network architectures and explainability methods. For these examples, the best explainability method for each artificial neural network architecture is marked by the cup on the top of the bars in the graph in fig. 4.

The evaluations can be performed with multiple deep learning models, which can be trained and validated on one or more datasets. Exemplary datasets for retina images are EyePACS (Cuadros & Bresnick, 2009) and KaggleDR dataset (EyePACS, 2015). In an exemplary experiment, a dataset was used containing 88704 images, which were randomly split in a training set of 68074 images, a validation set of 10000 images and a test set of 10000 images. In some examples, all images were rescaled to a square image, e.g. having 448x448 pixels. After rescaling, local average color was subtracted and mapped to 50% grey and images were clipped to 90% size to remove boundary effects. Image augmentation was applied by rotating, shifting and flipping images, as well as by applying zooms. The fully connected top layer was replaced with the following sequence of layers for all architectures: a global average pooling layer, two repetitions of a dense layer followed by a dropout layer, and finally a layer with only a single output with sigmoid activation function. A variant of the mean squared error that is tailored to ordinal classification was used as loss function for training. Models were evaluated using the quadratic weighted kappa. The InceptionV3 model attained a quadratic weighted kappa of 0.82, and the ResNet50 and VGG16 models both had a quadratic weighted kappa of 0.79. These scores are in the range of the top results attained in the KaggleDR competition. Note that performance can typically be increased by ensembling several models. In this way, the predication scores can be further improved. As such, the trained models are taken as a baseline for evaluating and comparing the explainability methods.

In an example, the agreement score (e.g. ECS score) is determined using a 10x10 grid of cells for the segmented saliency map 1' and the segmented feature map 5'. Further, the top 15 cells with the highest values in the discretized/segmented maps can be taken into account for computing the agreement score (i.e. S = 10 and K = 15 in the notation of section 2). It is also envisaged that another predetermined number of top cells is used (e.g. in a range between 3 and 100). It is also possible to use a predetermined number only if a condition is met, for instance only if the segmented maps each include said predetermined number of relevant cells. For example, if the segmented feature map only includes 7 relevant cells and the segmented saliency map includes 27 relevant cells, it is possible to compare only the most relevant 7 cells to each other (instead to the predetermined number of 15 for example).

In an exemplary experiment, the sensitivity to the selection of the *K* parameter was tested by experimenting with K = 10, 15 and 20. It was observed that the choice of this parameter may not affect the main outcomes. A 10x10 grid may be selected because this has the granularity to indicate potentially interesting regions to an ophthalmologist and it can deal with the outputs produced by the different explainability methods. The heatmaps produced by Grad-CAM, for example, were very different from those produced by Guided Backpropagation, and discretization in a 10x10 grid allows the score to be sensitive to the regions that these heatmaps indicate instead of their pixel-level appearances.

Fig. 4 shows the average agreement scores of the three artificial neural network architectures in combination with the different explainability methods. As a baseline comparison, the score obtained by using a heatmap that attributes importance randomly was included. In some examples, all methods and architecture combinations significantly outperform this baseline.

In the exemplary experimentation, the best combination was VGG16 with Grad-CAM. The selected Grad-CAM configuration was the one in which the pixels responsible for the activation of the filters of the first convolutional layer of the last convolutional block are visualized. The VGG16 architecture compared favorably to the other architectures in combination with most explainability methods. Two exceptions are VarGrad, for which InceptionV3 performed best, and Guided Backpropagation, for which ResNet50 performed best. Both the InceptionV3 and VGG16 model obtained best explainability results with Grad-CAM, while for ResNet50 best explainability was obtained with Guided Backpropagation with a significant margin. These examples illustrate that the choice of the artificial neural network architecture and explainability method interact. It will be appreciated that various other experiments can be carried out for optimizing the interaction between the artificial neural network architecture and the explainability method.

In these exemplary results from the exemplary experiments, it can be seen that the ResNet50 artificial network architecture in combination with the Guided Backpropagation explainability method provided for the best results; and that the InceptionV3 artificial neural network in combination with the Grad-CAM explainability method provided for the best results. However, this may be application dependent. Other results may for instance be obtained if an artificial trained neural network is used for analysis of MRI images.

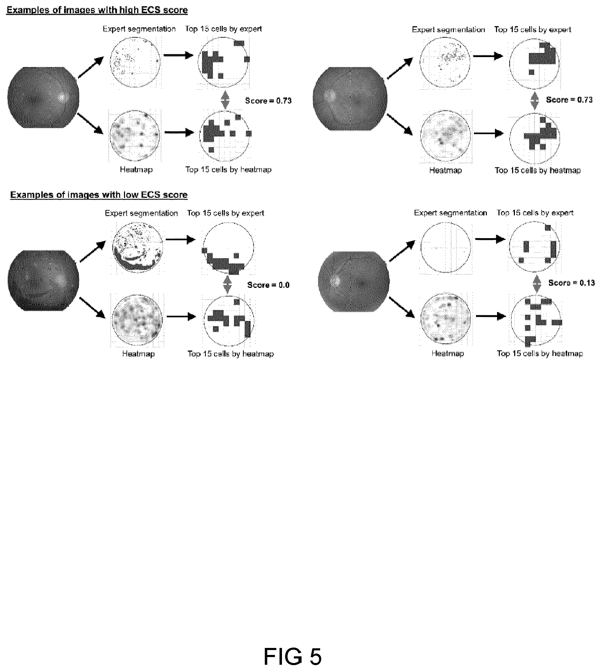

Fig. 5 shows a schematic diagram of exemplary evaluations. More particularly, fig. 5 shows four examples of retina images for which a saliency map and feature map is provided, based on which the level of agreement is determined according to the invention. In the exemplary experiments, Grad-CAM successfully identified 11 of the top 15 cells in the expert segmentation, which correspond to exudates and hemorrhages. The bottom left example shows that the model did not attribute importance to the large bleeding, resulting in a low ECS score (cf. agreement level between segmented saliency map and segmented feature map). In the example shown in the right bottom, there are only a few small lesions. The heatmap covers several of them, but also highlights several cells that are not marked by experts, which results in the low agreement score. In these examples, the agreement level (cf. 'ECS' values) are computed by comparing model explanations to a weighted combination of expert segmentations of hard exudates, soft exudates, hemorrhages and microaneurysms. Advantageously, in some examples, the agreement scores can also be computed separately for the different lesion types to investigate whether there were large differences in performance between them.

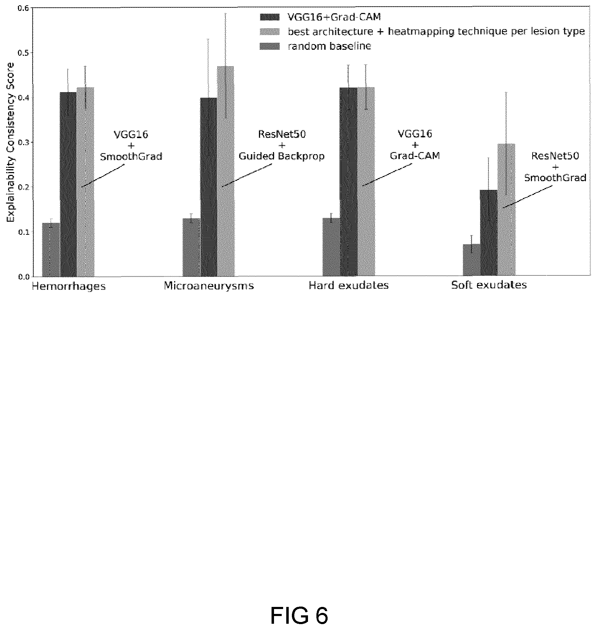

Fig. 6 shows a schematic diagram of a graph with exemplary agreement level scores. Average agreement level scores (cf. ECS scores) are computed separately for each lesion type. For each lesion type, the result of the random baseline, the result of the overall best configuration (VGG16+Grad-CAM) and the result of the configuration that scored best for this lesion type is illustrated. Fig. 6 summarizes the results of these exemplary experiments. No weighting was performed for these exemplary computations: the discretized model explanation was compared to the discretized lesion segmentation for one specific lesion type. It is observed that the ECS score can vary significantly across lesion types. ECS was lowest for soft exudates (0.29 for the best architecture and explainability method combination), and highest for microaneurysms (0.42 for the best combination). The overall best combination, VGG16+Grad-CAM, consistently performed well for all lesion types, but was not the best performing combination for each individual lesion type. For example, ResNet50+SmoothGrad performed best for soft exudates, and ResNet50+Guided Backpropagation performed best for microaneurysms.

According to the invention, deep learning can be used for e.g. DR detection, wherein saliency maps 1 (e.g. heatmaps) are employed for supporting the model predictions. The saliency maps 1 can be generated using various explainability methods. For example, heatmaps can be generated using patch-wise occlusion, Integrated Gradients, Grad-CAM, etc. The exemplary explainability methods may use heatmaps to verify that the model is looking at the expected locations, as a way to build a trustworthy machine learning model (e.g. classifier). Visually inspecting the heatmaps may be time-consuming and expensive. Providing an expert (e.g. ophthalmologist) with the predicted condition (e.g. DR grade) and accompanying heatmaps can improve expert analysis (e.g. DR diagnosis). For example, providing ophthalmologists with the predicted DR grade can improve accuracy of the DR diagnosis, increasing sensitivity for classifying moderate-or-worse DR without a drop in specificity. Providing heatmaps in addition to the DR grade can effectively further increase sensitivity. Advantageously, the invention allows for a more suitable selection of explainability methods (e.g. heatmapping technique) for a particular case or application. This can be performed in a systematic and objective way.

It is possible to evaluate explainability methods by verifying which properties they satisfy, or construct new ones that satisfy certain properties (e.g. completeness, implementation invariance, sensitivity, input invariance, class discriminativeness, etc.). However, this may not necessarily provide the practitioner with sufficient guidance in selecting an explainability method for a particular application, as no method satisfies all properties and it is hard to determine which ones are most relevant for a specific application. The evaluation provided by the invention can focus on certain condition detection (this is application dependent), e.g. for analysis of retina image for DR detection. The evaluation can be performed for obtaining an objective comparison of explainability methods specifically aimed at a particular task (e.g. DR detection). This can be done whilst leveraging expert markings in the feature map. The ground truth data can thus be taken into account. For example, pixel-level expert annotations in the dataset may be separable by lesion type, providing a way to tailor the ECS metric to the application by weighting pixels differently according to their type. Instead of evaluating interpretability by measuring how the accuracy of retrained models degrades as pixels that are estimated to be important are removed, the invention can perform an evaluating by comparing heatmaps to expert segmentations. From the exemplary experiments, it can be concluded that most explainability methods significantly outperformed the random baseline, although still leaving room for improvement.

The level of agreement can indicate how well a saliency map 1 (e.g. heatmap generated by a particular explainability method) matches the feature map 5 (e.g. an expert marking). However, pixel-level agreements between heatmaps and expert segmentations/markings may not be relevant. Heatmaps may mark the right regions in the image, but pixel-level segmentation accuracy may not be the goal. Furthermore, existing scores may have significant difficulties dealing with the highly different types of outputs that are generated by various explainability methods. For example, a Grad-CAM heatmap typically marks larger regions as being important, while Integrated Gradients marks individual pixels: any pixel-based score will behave very differently for Grad-CAM and Integrated Gradients, obstructing a fair comparison between the two. Moreover, existing scores may not incorporate domain knowledge and treat every pixel equally. For example, a pixel labelled as a microaneurysm may have the same weight as a pixel labelled as a hemorrhage, which does not reflect the importance of microaneurysms in DR diagnosis: despite the small size in terms of pixel count, they may strongly influence early level DR diagnosis. The ECS metric deals with the first two points by discretizing heatmaps and expert segmentations. The result of this step is that exact pixel locations and types of heatmap may not matter, but only the regions that they indicate as being important. Advantageously, this can be addressed by weighting the pixels in the expert annotation by their lesion type, such that small lesions that are important for diagnosis contribute sufficiently in the ECS calculation.

It will be appreciated that the expert markings in the feature map are dependent on the application. For example, retina images may be analyzed in order to determine hard exudates, soft exudates, microaneurysms and hemorrhages, and/or other abnormalities that are associated with DR such as venous beading, IRMAs and neovascularization. However, other features may also be detected depending on the application, for example for analysis of MRI, PET, PET/MRI, CT, X-ray, angiography, or any other medical imaging results.

Optionally, eye tracking data of an expert (e.g. ophthalmologists) is at least partially tracked whilst performing ground-truth analysis (e.g. DR grading). Such eye tracking data may cover all relevant lesions, and as such provide for a natural point of comparison for the saliency maps (e.g. heatmaps) produced by explainability methods.

It will be appreciated that the method and system may also use other types of images instead of pixel images. For instance, the images may be vector-based in various examples. Similarly as the case with pixel images, it is possible to perform a selected comparison of the most relevant cells, based on values in regions or areas of cells of the segmented saliency maps and feature maps.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

Various neural network models and/or neural network architectures can be used. A neural network has the ability to process, e.g. classify, image data. A neural network can be implemented in a computerized system. Neural networks can serve as a framework for various machine learning algorithms for processing complex data inputs. Such neural network systems may "learn" to perform tasks by considering examples, generally without being programmed with any task-specific rules. A neural network can be based on a collection of connected units or nodes called neurons. Each connection can transmit a signal from one neuron to another neuron in the neural network. A neuron that receives a signal can process it and then signal additional neurons connected to it (cf. activation). The output of each neuron is typically computed by some non-linear function of the sum of its inputs. The connections can have respective weights that adjust as learning proceeds. There may also be other parameters such as biases. Typically, the neurons are aggregated into layers. Different layers may perform different kinds of transformations on their inputs to form a deep neural network.

A deep learning neural network can be seen as a representation-learning method with a plurality of levels of representation, which can be obtained by composing simple but non-linear modules that each transform the representation at one level, starting with the raw input, into a representation at a higher, slightly more abstract level. The neural network may identify patterns which are difficult to see using conventional methods. Hence, instead of writing custom code specific to a problem of analyzing images, the network can be trained to be able to handle different and/or changing images e.g. using a classification algorithm. Training data may be fed to the neural network such that it can determine a classification logic for efficiently analyzing the input image (e.g. retina image or medical image).

The graphics and/or image/video processing techniques may be implemented in various hardware architectures. Graphics functionality may be integrated within a chipset. Alternatively, a discrete graphics processor may be used. For example, processing of images (still or video) may be performed by a graphics subsystem such as a graphics processing unit (GPU) or a visual processing unit (VPU). As still another embodiment, the graphics or image/video processing functions may be implemented by a general purpose processor, including e.g. a multi-core processor. In a further embodiment, the functions may be implemented in a consumer electronics device. Embodiments, using a combination of different hardware architectures are possible.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

**Claims**

1. A computing system configured to evaluate a performance of explainability methods used with artificial neural networks which are configured to analyze images of retina of eyes of subjects, the system including one or more hardware computer processors, and one more storage devices configured to store software instructions configured for execution by the one or more hardware computer processors in order to cause the system to:

    receiving a saliency map of a retina image generated by applying an explainability method on a trained artificial neural network of a machine learning model, the trained artificial neural network being configured to perform image analysis on the retina image;
    receiving a feature map of the retina image with marked features generated by performing feature extraction on the retina image, wherein the marked features correspond to local features which are used for ground-truth analysis of the retina image;
    dividing both the saliency map and the feature map into cells in order to obtain a segmented saliency map and a segmented feature map, each cell covering an area with a plurality of pixels, wherein a relevance score is assigned to each cell based on values of individual pixels within the cells in the saliency map and the feature map;
    selecting, for both the segmented saliency map and segmented feature map, a selected number of selected cells corresponding to the most relevant cells having highest relevance scores within the segmented saliency map and the segmented feature map, respectively; and
    computing a level of agreement between the segmented saliency map and the segmented feature map by comparing the selected cells having highest relevance scores in the segmented saliency map to the selected cells having highest relevance scores in the segmented feature map.

2. The computing system according to claim 1, wherein the level of agreement is determined by calculating an agreement score based on a number of matching cells of the selected cells in the segmented saliency map and the segmented feature map.

3. The computing system according to claim 2, wherein the agreement score is calculated by dividing the number of matching cells by the selected number of cells selected for comparison.

4. The computing system according to any one of the preceding claims, wherein the feature map includes at least a first feature class and a second feature class, the first feature class being different from the second feature class, and wherein the first feature class and second feature class are given different weights, wherein the relevance score assigned to each cell is at least partially based on the respective weights.

5. The computing system according to claim 4, wherein the first feature class includes features typically having smaller surface areas in the retina image than features in the second feature class, and wherein the marked areas of the first feature class are provided with higher weights to compensate for the smaller surface areas.

6. The computing system according to claim 4 or 5, wherein a size of marked features in the segmented feature map is adjusted based on its respective weight.

7. The computing system according to any one of the claims 4-6, wherein the feature map includes at least three different feature classes, more preferably at least four different feature classes.

8. The computing system according to any one of the preceding claims, wherein the feature map includes at least two feature classes of a group consisting of at least: soft exudates, hard exudates, microaneurysms, intraretinal hemorrhages, pre-retinal hemorrhages, venous beadings, intraretinal microvascular abnormalities, drusen, retinal nerve fiber layers defects, peripapillary atrophy, peripapillary edema, peripapillary hemorrhage, peripapillary atrophy, macular edema, choroidal neovascularization, retinal vein occlusion, laser marks, geographic atrophy, and neovascularization.

9. The computing system according to any one of the preceding claims, wherein the saliency map is in a form of a heatmap overlayable on the retina image, wherein high intensity in the heatmap reflects an importance of regions in the image in their contributions towards the output of the trained artificial neural network of the machine learning model.

10. The computing system according to any one of the preceding claims, wherein a plurality of saliency maps are received generated by applying different explainability methods and/or different trained artificial neural networks, wherein, for each saliency map of the plurality of saliency maps, a corresponding level of agreement between the respective saliency map and the feature map is computed in order to determine a combination of explainability method and trained artificial neural network which results in the highest level of agreement.

11. The computing system according to any one of the preceding claims, wherein the selected number of most relevant cells is in a range between 3 and 50 percent of a total number of cells present in both the segmented saliency map and segmented feature map, more preferably is in a range between 5 and 30 percent of the total number of cells, even more preferably is in range between 10 and 20 percent of the total number of cells.

12. The computing system according to any one of the preceding claims, wherein the selected number of cells is set to a predefined number of cells if the predefined number of cells is smaller or equal to a total number of cells having a relevance score above a predetermined threshold, wherein the selected number of cells is set to the total number of cells having a relevance score above the predetermined threshold if the predefined number of cells is larger than the total number of cells having a relevance score above the predetermined threshold.

13. The computing system according to any one of the preceding claims, wherein the trained artificial neural network is a trained deep learning network configured to receive the image of the retina as input, and to provide a classification or regression of the image of the retina as output.

14. The computing system according to any one of the preceding claims, wherein the trained artificial neural network is configured to classify images of retina of eyes such as to infer or further analyze a condition of the subjects, such as a vision-related.

15. A computer-implemented method of evaluating a performance of explainability methods used with artificial neural network models which are configured to classify images of retina of eyes of subjects, the method comprising operating one or more hardware processors to:

   receive a saliency map of a retina image generated by applying explainability method on a trained artificial neural network of a machine learning model, the trained artificial neural network being configured to perform image analysis on the retina image;
   receive a feature map of the retina image with marked features generated by performing feature extraction on the retina image, wherein the marked features correspond to local features which are used for ground-truth analysis of the retina image;
   divide both the saliency map and the feature map into cells in order to obtain segmented saliency map and a segmented feature map, each cell covering an area with a plurality of pixels, wherein a relevance score is assigned to each cell based on values of individual pixels within the cells in the saliency map and feature map;
   select, for both the segmented saliency map and segmented feature map, a selected number of selected cells corresponding to the most relevant cells having highest relevance scores within the segmented saliency map and the segmented feature map, respectively; and
   compute a level of agreement between the segmented saliency map and the segmented feature map by comparing the selected cells having highest relevance scores in the segmented saliency map to the selected cells having highest relevance scores in the segmented feature map.

FIG 2

FIG 3

FIG 4

Examples of images with high ECS score

Examples of images with low ECS score

# FIG 5

FIG 6

Europäisches
Patentamt

European
Patent Office

Office européen
des brevets

## EUROPEAN SEARCH REPORT

Application Number

EP 20 17 9053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUBEN HEMELINGS ET AL: "Accurate prediction of glaucoma from colour fundus images with a convolutional neural network that relies on active and transfer learning", ACTA OPHTHALMOLOGICA: THE OPHTHALMOLOGICAL JOURNAL OF THE NORDIC COUNTRIES, vol. 98, no. 1, 25 July 2019 (2019-07-25), XP055752879, Denmark ISSN: 1755-375X, DOI: 10.1111/aos.14193 * abstract * * page 3, first column, last paragraph * * page 3, second column, second paragraph, page 3, third column, first paragraph * * from page 3, third column, last paragraph to page 4, first column, second paragraph * * page 4, first column, second paragraph * * page 4, first column, third paragraph, starting "Evaluation metrics" * * from page 4, third column, last paragraph, to page 5, first column, first paragraph * * figure 3 * * table 1 *  ----- -/-- | 1-15 | INV. G06K9/46 G06K9/00 |
| | | | TECHNICAL FIELDS SEARCHED (IPC) |
| | | | G06K |

The present search report has been drawn up for all claims

| Place of search | Date of completion of the search | Examiner |
|---|---|---|
| The Hague | 23 November 2020 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 17 9053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BYLINSKII ZOYA ET AL: "What Do Different Evaluation Metrics Tell Us About Saliency Models?", IEEE TRANSACTIONS ON PATTERN ANALYSIS AND MACHINE INTELLIGENCE, IEEE COMPUTER SOCIETY, USA, vol. 41, no. 3, March 2019 (2019-03), pages 740-757, XP011708302, ISSN: 0162-8828, DOI: 10.1109/TPAMI.2018.2815601 [retrieved on 2019-02-04] * abstract * * page 2; figures 1,2 * | 1-15 | |
| A | LIJUAN DUAN ET AL: "Visual saliency detection by spatially weighted dissimilarity", COMPUTER VISION AND PATTERN RECOGNITION (CVPR), 2011 IEEE CONFERENCE ON, IEEE, 20 June 2011 (2011-06-20), pages 473-480, XP032038178, DOI: 10.1109/CVPR.2011.5995676 ISBN: 978-1-4577-0394-2 * abstract * * figure 1 * * From page 2, right column, second last paragraph, to page 3, left column, first paragraph * | 1-15 | TECHNICAL FIELDS SEARCHED (IPC) |

The present search report has been drawn up for all claims

| Place of search | Date of completion of the search | Examiner |
|---|---|---|
| The Hague | 23 November 2020 | Natanni, Francesco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMPRASAATH R. SELVARAJU et al.** Grad-CAM: Visual Explanations from Deep Networks via Gradient-based Localization. *International Journal of Computer Vision,* 2020, vol. 128, 336-359
- **SIMONYAN, K. ; VEDALDI, A. ; ZISSERMAN, A.** Deep inside convolutional networks: Visualising image classification models and saliency maps. *ICLR,* 2013
- **SUNDARARAJAN, M. ; TALY, A. ; YAN, Q.** Axiomatic Attribution for Deep Networks. *International Conference on Machine Learning,* 2017
- **SHRIKUMAR, A. ; GREENSIDE, P. ; KUNDAJE, A.** Learning important features through propagating activation differences. *International Conference on Machine Learning,* 2017
- **BACH, S. ; BINDER, A. ; MONTAVON, G. ; KLAUSCHEN, F. ; MULLER, K. ; SAMEK, W.** On pixel-wise explanations for non-linear classifier decisions by layerwise relevance propagation. *PLOS ONE,* 2015
- **SELVARAJU, R. R. ; COGSWELL, M. ; DAS, A. ; VEDANTAM, R. ; PARIKH, D. ; BATRA, D.** Grad-CAM: Visual Explanations from Deep Networks via Gradient-based Localization. *International Journal of Computer Vision,* 2016
- **ZEILER, M. ; FERGUS, R.** Visualizing and understanding convolutional networks. *ECCV,* 2014
- **SMILKOV, D. ; THORAT, N. ; KIM. B. ; VIEGAS, F. ; WATTENBERG, M.** Smoothgrad: removing noise by adding noise. *Workshop on Visualization for Deep Learning at ICML,* 2017
- **HOOKER, S. ; ERHAN, D. ; KINDERMANS, P. ; KIM, B.** A benchmark for interpretability methods in deep neural networks. *Conference on Neural Information Processing Systems,* 2019